# EUROPEAN PATENT SPECIFICATION

(11) **EP 0 502 886 B1**
(45) Date of publication and mention of the grant of the patent: **09.02.1994**
(21) Application number: 90917147.2
(22) Date of filing: 16.11.1990
(51) Int. Cl.: G11B 33/04, G11B 17/22, G11B 23/03

(54) **STORAGE DEVICE**
SPEICHERVORRICHTUNG
DISPOSITIF DE RANGEMENT

(30) Priority: 28.11.1989 NL 8902937
(43) Date of publication of application: 16.09.1992
(73) Proprietor: TOMBO TRADING INTERNATIONAL B.V., 1132 XM Volendam (NL)
(72) Inventor: Bokstijn, Tom, NL-1131 XM Volendam (NL)
(74) Representative: de Bruijn, Leendert C.
(86) International application number: NL9000172
(87) International publication number: WO9108571

(56) References cited:
- EP-A- 0 267 538
- WO-A-86/01328
- DE-A- 2 307 410
- DE-A- 3 301 680
- DE-A- 3 514 171
- FR-A- 2 258 687
- US-A- 4 052 113
- US-A- 4 221 440
- US-A- 4 609 232
- US-A- 4 826 261
- IBM TECHNICAL DISCLOSURE BULLETIN, vol. 15, no. 6, November 1972, New York, US; page 1910, R.A.BILLINGS et al.: "Disk file"

## Description

The present invention relates to a storage according to the preamble of claim 1.

Such a storage device is known from DE-A-3 301 680. In that specification the drum which contains the objects is placed with its axis vertically. The drum is rotatably arranged behind a stationary wall having an opening. Through rotation of the drum the desired storage space of the drum can be positioned in front of the opening to introduce or remove the related object. In wall units and other furnature it is often desirable to have a storage device in which the drum can be positioned with its axis in horizontal direction, i.e. introducing and removing objects is realized in this direction. Vertical positioning of the drum according to DE-A-33 01 680 would result in an unbalanced magazine if this was not completely filled which is of course the case when an object is introduced or removed. Furthermore it is necessary in that case to operate such a device with two hands.

The subject invention aims to overcome these problems and to provide a storage device which can be vertically positioned.

According to the invention this is realized with a storage device as described above having the characterizing features of claim 1.

From US-A-4 609 232 a stationary magazine is known. As with DE-A-33 01 680 the drum is positioned horizontally, i.e. having its axis extending in vertical direction.

In EP-A-0 263 496 a magazine of a player is disclosed, in which the compact discs are placed in a circular manner. Opposite-lying compact discs are spaced apart at such a distance that a conveyor can move between them. This conveyor comprises a cylindrical element in which the compact discs can be inserted or out of which they can be slid. This conveyor element can be brought through rotation in front of the compact disc concerned, and the latter can be picked up therein and conveyed further to the player. Such a magazine is very complex and expensive to produce, and can be used properly only in conjunction with a fully automated playing system. Such a device cannot be used in practice merely for storing compact discs.

Unlike the state of the art, the compact disc is now not removed towards the centre of the magazine, but is moved at right angles to this plane. Such a device is particularly simple to produce, because only a stationary magazine is necessary, with only one outer wall provided with an opening which can be taken into different positions to release the different objects. The opening in this case can be so large that it is possible to place the fingers in it in order to be able to take hold of the objects. This does, however, have the disadvantage that dust and the like can enter the magazine as a result. For that reason, according to a further embodiment, provision is made for removal means which comprise a rod system connected to the rotatable wall, the engaging end of which system must be taken opposite the opening of the rotatable wall. This means that it is adequate to have an opening which corresponds to the dimensions of the object which is to be stored. If this object has to be taken out, it can be brought out partially by operating the removal means, to such an extent that it can be gripped further by hand.

In order to operate the removal means for bringing out the objects, they can be fitted near the rotatable wall. This makes it possible to operate both the rotatable wall and the removal devices with one hand.

In order to prevent the removal means from engaging in the space between two objects, in a preferred embodiment of the invention indexing means, permitting operation of the removal devices only in specific discrete positions, are present.

For the facilitation of the accurate positioning of the opening, and in order to be in a position to remove the correct object immediately, in a preferred embodiment indicator means are present for determining the position of the rotatable wall relative to the remainder of the device.

According to a further advantageous embodiment, the storage spaces comprise a toothed part extending along the outer periphery of the storage device and a part lying coaxial thereto which lies therein and has the same number of teeth. Such teeth can be made particularly simply of strip material. Such a strip material is made in large quantities for all kinds of drive belts.

The invention will be explained in greater detail below with reference to an example of an embodiment shown in the drawing, in which:
Fig. 1 shows a perspective external view of the device according to the invention;
Fig. 2 shows a side view in cross-section of the device illustrated in Fig. 1; and
Fig. 3 shows a view corresponding to Fig. 2 of a further embodiment.

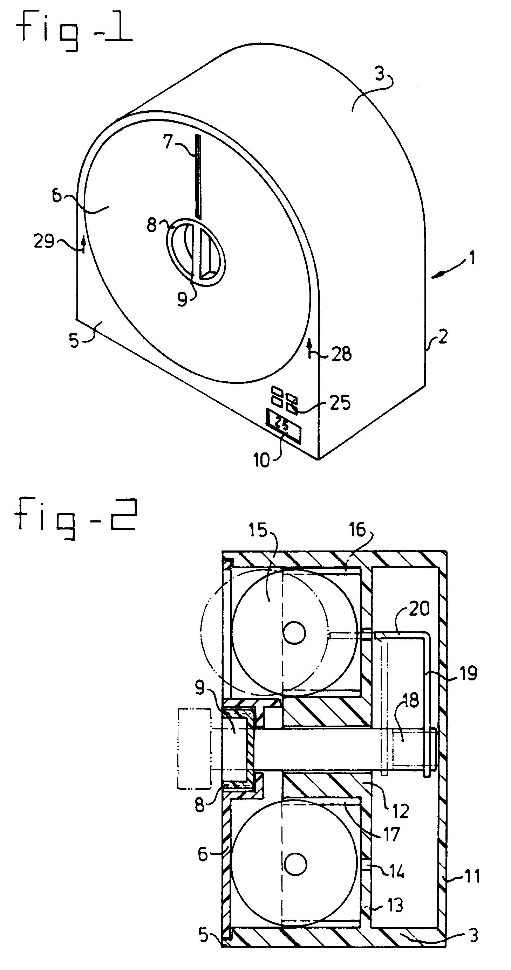

The storage device according to the invention is shown in Fig. 1 and is indicated in its entirety by 1. It comprises a box-shaped body 2 provided with a top/side wall 3, a rear and bottom wall (not shown), and a front wall 5. A rotatable wall part 6, provided with a slit-shaped opening 7 and a recess 8 over which a bridge 9 extends, is placed in the front wall 5. Wall part 6 is rotatable relative to front wall 5 through gripping bridge part 9 with the fingers. As shown, a numerical display 10 is also present. By means of transmission devices (not shown) the position of the rotatable wall part 6 is displayed by the display means 10. It is possible to make this transmission either mechanical or electrical. A keyboard 25, by means of which the number or a brief designation of the desired stored object can be entered, is also present. Illuminable arrow indicators are also provided in the front wall 5.

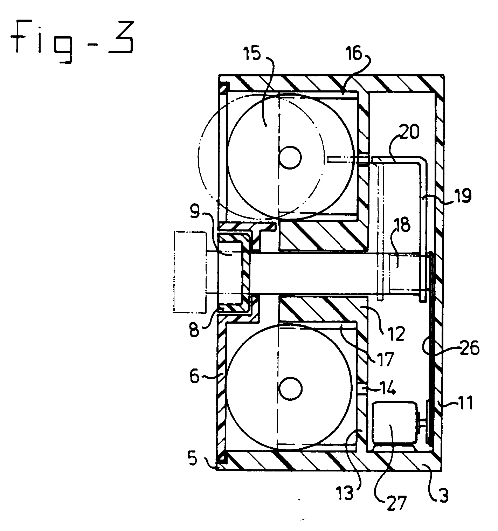

Fig. 2 shows the device according to Fig. 1 in side view. The rear wall 11 is also shown here. It can be seen that a concentric ring 12 connected to the rear wall 11 is present. The connection takes place by means of a plate 13 provided with perforations 14. Wall 12 and plate 13 bound spaces for the storage of objects such as compact discs 15. These are held in place through the fact that teeth 16 are provided along the inside of the top/side wall 3. Teeth 17 are fitted on wall 12. The pitch of the various teeth is such here that an equal number of slits is bounded for accommodating the compact disc 15. Such teeth can be achieved, for example, by fitting a strip material provided with teeth.

Fig. 2 also shows that recessed part 8, in which bridge part 9 is fitted, can be brought outwards relative to the rotatable wall part 6. In the non-use state this recessed part 8 is, however, moved inwards by a spring (not shown). A bush 18, provided with a rod system 19, 20, is connected to part 8. Moving part 8 outwards will cause part 20 to move to the left in Figure 2. If part 20 is situated in front of an opening 14, it can go into the space for compact discs, as a result of which compact disc 15 in Fig. 2 is moved to the left and can be moved out of opening 17. This makes it possible to remove compact discs from the storage device in a particularly simple way. They can be inserted simply by pushing inwards. In order to prevent an excessively great force from being exerted on rod 20 through the fact that it is not in front of an opening, bush 18 can be provided with teeth (not shown in further detail) which mesh with corresponding teeth provided in the fixed part of the storage device, so that recessed part 8 can be moved outwards only in discrete positions. After the desired compact disc 15 is entered by means of keyboard 25, the direction in which bridge part 9 must be rotated will be indicated by arrow 28 or arrow 29 being illuminated.

Fig. 3 shows another embodiment of the invention. An electric motor 27 is provided here with the aid of a toothed belt or chain which is connected to the rotary drum. After the desired compact disc is keyed in on keyboard 25, slit 7 will be placed in the correct way relative to the magazine by means of motor 17. In order to avoid the entry of dust, slit 7 can be provided with a dust seal, such as brush hairs.

## Claims

1. Storage device (1) for thin, flat objects (15), such as compact discs, comprising a magazine with storage spaces within planes which are radially aligned with regard to a common axis the access to the space being axially to said axis, the enclosure of the magazine comprising a wall (6) extending perpendicular to said axis and being rotatable around said axis relative to the magazine, said wall having an opening (7), which is to be brought into line with the storage spaces for the insertion and removal of said objects, and in that removal means (20), acting by pressure upon the side of the objects opposite the side thereof adjoining said opening are provided, characterized in that the magazine is stationary and the removal means (20) is connected to said wall (6) for conjointly rotation about said axis and for axial movement relative to said wall, and wherein in the position of use said axis is subtantial horizontal.

2. Storage device according to Claim 1, in which the removal means comprise a rod system (20) connected to the rotatable wall, the engaging end of which system is to be taken opposite the opening of the rotatable wall (6).

3. Storage device according to any of the preceding claims, in which the rotatable wall is provided with control means for operating the removal means in the outward direction.

4. Storage device according to any of the preceding claims, provided with indexing means which permit action of the removal means on the objects only in discrete positions.

5. Storage device according to any of the preceding claims, in which indicator means (10) are present for determining the position of the rotatable wall relative to the remainder of the device.

6. Storage device according to any of the preceding claims, in which the storage spaces comprise a toothed part extending along the outer periphery of the storage device and a part lying coaxial thereto which lies therein and has the same number of teeth.

7. Storage device according to Claim 6, in which the teeth are made of strip material.

## Patentansprüche

1. Speichervorrichtung (1) für dünne, flache Gegenstände (15), wie CD-Platten, welche ein Magazin mit Speicherräumen in Ebenen aufweist, die radial bezüglich einer gemeinsamen Achse ausgerichtet sind, wobei der Zugriff zu dem Raum axial zu dieser Achse erfolgt, bei der das Gehäuse des Magazins eine Wand (6) aufweist, welche senkrecht zu der Achse verläuft und die um die Achse relativ zum Magazin drehbar ist, bei der die Wand eine Öffnung (7) hat, welche in Linienausrichtung zu den Speicherräumen zum Einführen und Entnehmen der Gegenstände bringbar ist, und bei der eine Entnahmeeinrichtung (20) vorgesehen ist, welche durch einen Druck auf die Seite der Gegenstände beaufschlagbar ist, welche der an die Öffnung angrenzenden Seite gegenüberliegt, **dadurch gekennzeichnet,** daß das Magazin stationär ist, und daß die Entnahmeeinrichtung (20) mit der Wand (6) zur Verbunddrehung um die Achse und zur axialen Bewegung relativ zur Wand verbunden ist, wobei im Gebrauchszustand die Achse im wesentlichen horizontal ist.

2. Speichervorrichtung nach Anspruch 1, bei der die Entnahmeeinrichtung ein Stangensystem (10) aufweist, welches mit der drehbaren Wand verbunden ist, wobei das Eingriffsende des Systems gegenüberliegend zu der Öffnung der drehbaren Wand (6) zu bringen ist.

3. Speichervorrichtung nach einem der vorangehenden Ansprüche, bei der die drehbare Wand mit einer Steuereinrichtung zum Betreiben der Entnahmeeinrichtung in eine nach außen weisende Richtung versehen ist.

4. Speichervorrichtung nach einem der vorangehenden Ansprüche, welche mit einer Weiterschalteinrichtung versehen ist, welche eine Aktivierung der Entnahmeeinrichtung für die Gegenstände nur in einzelnen Positionen gestattet.

5. Speichervorrichtung nach einem der vorangehenden Ansprüche, bei der Anzeigeeinrichtungen (10) zur Bestimmung der Position der drehbaren Wand relativ zu dem Restteil der Vorrichtung vorgesehen sind.

6. Speichervorrichtung nach einem der vorangehenden Ansprüche, bei der die Speicherräume ein gezahntes Teil aufweisen, welches entlang des äußeren Umfangs der Speichervorrichtung verläuft und ein Teil aufweist, welches koaxial hierzu liegt und welches darin liegt und das die gleiche Anzahl von Zähnen hat.

7. Speichervorrichtung nach Anspruch 6, bei der die Zähne aus Bandmaterial hergestellt sind.

## Revendications

1. Dispositif de rangement (1) pour objets minces et plats (15) tels que disques compacts, comprenant un magasin avec des espaces de rangement dans des plans alignés radialement par rapport à un axe commun, l'accès à l'espace étant axial par rapport à cet axe, l'enceinte du magasin comprenant une paroi (6) perpendiculaire à cet axe et pouvant tourner autour de cet axe par rapport au magasin, cette paroi étant munie d'une ouverture (7) à aligner avec les espaces de rangement pour y introduire et en extraire les objets, et comprenant des moyens d'extraction (20), agissant par pression sur le côté des objets opposé au côté adjacent à ladite ouverture, caractérisé en ce que le magasin est fixe et les moyens d'extraction (20) sont reliés à ladite paroi (6) pour tourner conjointement autour de l'axe précité et se mouvoir axialement par rapport à ladite paroi, et dans lequel, en position de fonctionnement, l'axe est sensiblement horizontal.

2. Dispositif de rangement selon la revendication 1, dans lequel les moyens d'extraction comprennent un système à tige (20) relié à la paroi tournante, l'extrémité de contact de ce système étant opposée à l'ouverture de la paroi tournante (6).

3. Dispositif de rangement selon l'une quelconque des revendications précédentes, dans lequel la paroi tournante est munie de moyens de commande pour actionner les moyens d'extraction vers l'extérieur.

4. Dispositif de rangement selon l'une quelconque des revendications précédentes, muni de moyens d'indexation qui permettent l'action des moyens d'extraction sur les seuls objets placés en des positions discrètes.

5. Dispositif de rangement selon l'une quelconque des revendications précédentes, dans lequel des moyens d'affichage (10) existent pour déterminer la position de la paroi tournante par rapport au reste du dispositif.

6. Dispositif de rangement selon l'une quelconque des revendications précédentes, dans lequel les espaces de rangement comprennent une partie dentée placée le long de la périphérie extérieure du dispositif de rangement, et une partie placée coaxialement par rapport à celle-ci, située à l'intérieur et ayant le même nombre de dents.

7. Dispositif de rangement selon la revendication 6, dans lequel les dents sont faites dans un matériau en ruban.
